Europäisches Patentamt

European Patent Office

Office européen des brevets

(19)

(11) Publication number: **0 026 801**
**B1**

## (12) EUROPEAN PATENT SPECIFICATION

(45) Date of publication of patent specification: **18.05.83**

(21) Application number: **79302147.8**

(22) Date of filing: **09.10.79**

(51) Int. Cl.³: **G 08 B 25/00, H 02 H 3/16, G 01 R 31/08**

(54) Method of and apparatus for transmitting information about flow of fault current in a faulty section of an electric power transmission system.

(43) Date of publication of application:
**15.04.81 Bulletin 81/15**

(45) Publication of the grant of the patent:
**18.05.83 Bulletin 83/20**

(84) Designated Contracting States:
**AT BE DE FR**

(56) References cited:
**DE - C - 1 059 551**
**US - A - 3 480 940**

**H. TITZE "Fehler und Fehlerschutz in elektrischen Drehstromanlagen" Band II "Der Fehlerschutz" 1953, SPRINGER VERLAG, Wien.**

(73) Proprietor: **THE ELECTRICITY COUNCIL**
**30 Millbank**
**London, SW1P 4RD (GB)**

(72) Inventor: **Formby, Joseph Richard**
**2 Hunters Crescent**
**Tarvin, Chester (GB)**
Inventor: **Roe, Gerald**
**8 Martin Road**
**Broughton, Chester (GB)**

(74) Representative: **Rennie, Ian Malcolm et al,**
**BOULT, WADE & TENNANT 27 Furnival Street**
**London EC4A 1PQ (GB)**

# Method of and apparatus for transmitting information about flow of fault current in a faulty section of an electric power transmission system

This invention relates to the location of a faulty section in an electrical power transmission system.

In a typical electrical power transmission system in which power is transmitted at a very high voltage and is transformed down to say 11 kV at sub-stations, the feeders from the sub-stations would typically comprise several sections of cable with a section switch between each section to enable a faulty section to be isolated. If a fault occurs on this feeder causing a fault current to flow, it is necessary to determine which section is faulty and the common practice is to provide, at each switch, a latched relay which will operate on the passage of fault current. It is then necessary for the investigating engineer to inspect these relays, which give a visual indication, to determine which of the section switches along the feeder have passed the fault current. The fault is in the section immediately beyond the furthest switch to have recorded the passage of the fault current. Such switches are commonly at unattended locations and the engineer has to visit each section switch in order to locate the faulty section of cable.

One example of such a switching device is disclosed in German Federal Republic Patent Specification DE—C—1059551 which discloses a switching device operated by an oscillator using a trigger circuit energised by a differential transformer coupled to a phase and neutral line to detect unbalance between the currents in these lines.

The present invention however is not concerned with such switching devices but with the location of a faulty section. Such a section would have its own section switch which may be of any convenient type. As stated above, the location of a faulty section heretofore has required a visit from an engineer.

The present invention, from one of its aspects, is concerned with an improved method and apparatus for transmitting to a central location information identifying each section which has passed a fault current, making use of the power transmission cable or line for transmitting the information. It will be appreciated that, following a fault, the feeder may have been isolated by tripping of a circuit breaker and there is then no mains power supply available at the locations from which the information is to be transmitted.

According to one aspect of the present invention, a method of locating a faulty section of a cable or line in an alternating current power transmission system having a plurality of sections, each with a fault sensor, is characterised by the steps of, in each section, utilising the sensed fault current at a point in that section to charge capacitance means, energising a transmitter with the stored energy to transmit a signal or signals at a predetermined time after the cessation of the fault current into the cable or line, the transmitters at the different points being arranged to transmit the signal or signals at different predetermined time intervals after the cessation of the fault current, and receiving the various signals transmitted along said cable or line and recording the received signals to indicate in which sections the fault current has been sensed. As explained above, the cable or line would typically have switches between the sections, to enable any faulty section to be isolated, and conveniently the passage of the fault current is sensed adjacent each section switch.

Using this technique, the information about the passage of fault current in the various sections is transmitted and recorded at a central location without any necessity for providing batteries or other power supplies at the location of the transmitters and without any separate communication link apart from the power transmission line.

The fault current may be sensed and the capacitance means charged using a current transformer to extract power from the fault current.

The signal transmission is conveniently effected by means of a pulse or pulses of a high frequency carrier. The same carrier frequency may be used for all the signals. Each transmitter may be arranged to transmit for example a single pulse of a carrier at a frequency of several kHz. The signal injection into the cable may be effected using a current transformer. If the fault current is sensed using a current transformer, the carrier frequency may be injected into the transmission line through the same current transformer or through a separate current transformer.

In a feeder in a power distribution system, the fault current may have tripped a circuit breaker at the input substation and hence the feeder will be open-circuit at this point. The receiver conveniently is located at this substation and it is therefore preferred to arrange the receiver to detect a voltage signal rather than a current signal. Thus, at the receiver, voltage detecting means may be provided for detecting the signal, for example using a capacitive coupling.

The invention furthermore includes within its scope apparatus for locating, by the above-described method, a faulty section of an alternating current power transmission line or cable which has a plurality of sections and has a fault current sensor for each section, is characterised in that said apparatus comprises, for each section, means responsive to a fault current arranged to charge capacitance means forming an energy storage, a transmitter arranged for energisation with the stored energy and to transmit into said transmission line or cable a signal at a predetermined time after the cessation of the fault current, said predetermined times differing for the different transmitters whereby the signals are receivable in succession at a receiver responsive to signals on the line, and recording means responsive to the received signals to indicate the location of the faulty section.

The transmission line would commonly be a cable having an outer sheath or shield which is earthed. The fault current may be detected using a current transformer coupled around the cable, with the outer sheath or shield interrupted adjacent the current transformer, a bypass circuit being provided for electrical continuity across the interruption, the bypass circuit being linked with the current transformer to give a flux in opposition to that from the current in said sheath or shield. In this case, for each section, the transmitter may be arranged to feed said signal into said current transformer to be coupled thereby into the cable or into a separate current transformer.

Such apparatus may have a receiver coupled to said cable or line to be responsive to said signals, the receiver having means for indicating the relative times of reception of the signals whereby the signals received from the various transmitters are identifiable.

For locating a fault current in a conductor or conductors of a power transmission cable having a metal sheath or shield, said means responsive to a fault current may comprise a current transformer around the cable, the shielding of the cable being interrupted adjacent the transformer with a bypass circuit to provide electrical continuity extending around the interruption, said bypass circuit being coupled into the current transformer to provide coupling of the bypass current in opposition to the direct coupling from the current in the sheath or shield, which sheath or shield passes through the current transformer, said transformer being arranged to charge said capacitance means and is further characterised in that said transmitter is arranged for injecting a high frequency signal into said current transformer for coupling to a conductor or conductors in the cable.

The following is a description of one embodiment of the invention, reference being made to the accompanying drawings in which:—

Figure 1 is a diagram illustrating part of a power supply system with a transmitter and a receiver for fault location indication; and

Figure 2 illustrates a further detail a transmitter employed in the arrangement of Figure 1.

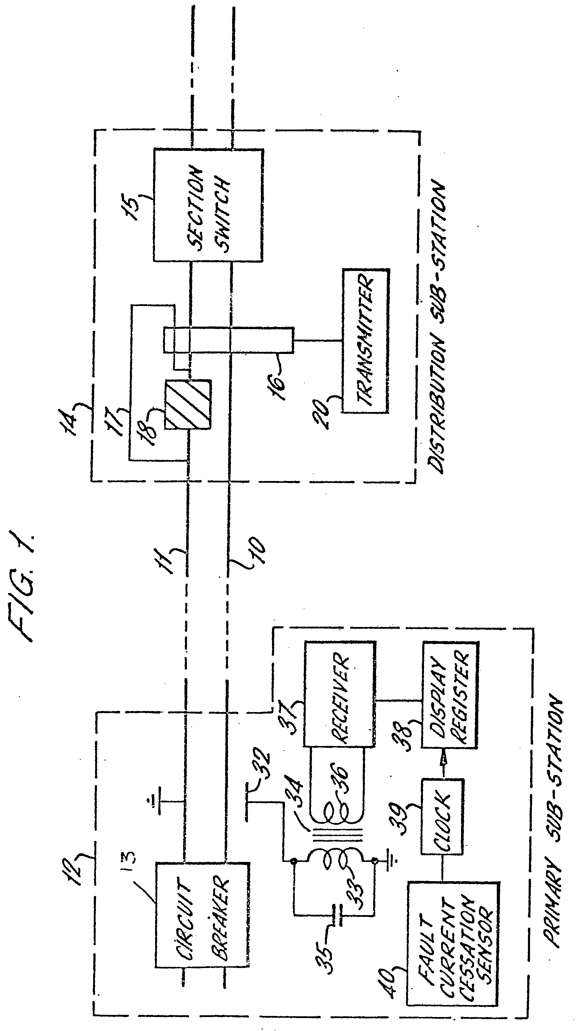

Referring to Figure 1 there is shown diagrammatically part of a cable comprising a power transmission line, this cable being shown diagrammatically as a conductor 10 with an outer earthed sheath and armouring 11. Typically the cable would have three phase conductors within the sheath. The cable extends from a primary station indicated diagrammatically at 12 and which might typically contain a transformer for transforming the voltage down from EHv supply to, for example, 11 kV for transmission over the cable to a plurality of distribution substations. The primary station typically would also include a circuit breaker 13 which would be tripped by passage of excessive current, such as would for example be produced by an earth fault on the feeder. One of the distribution substations is indicated diagrammatically at 14. Typically such a substation would include a switch shown diagrammatically at 15 and known as a section switch, which switch can be operated to isolate a faulty section of the cable. The fault current at a point adjacent the section switch is detected by means of a current transformer 16 extending around the cable. This transformer is coupled also to a bypass connector 17 forming a bypass around an interruption in the sheath of the cable constituted by an insulating gland 18; the current in the bypass connector is the same as that in the sheath or shield but is coupled in opposition into the current transformer so that the latter only senses the fault current flowing in the core or cores of the cable.

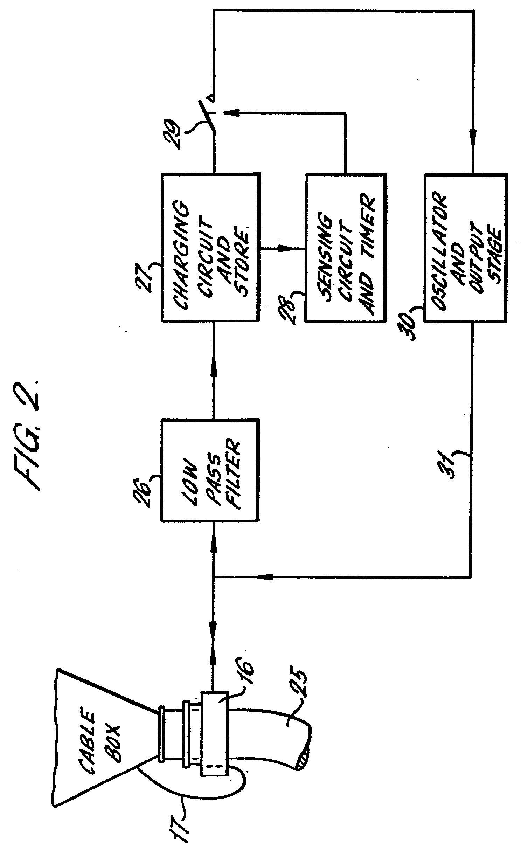

This current transformer, in this particular embodiment, is also utilised for the injection of a high frequency signal, typically having a frequency of several kHz, from a transmitter 20 which is illustrated in further detail in Figure 2. Referring to Figure 2 the cable is shown at 25 with the current transformer 16 extending around the cable and also around the aforementioned bypass connection 17. When fault current passes through the conductor cores, a flux at the mains supply frequency is produced in the current transformer and an output signal at this frequency from a secondary winding passes through a low pass filter 26 to energise a charging circuit for an energy store 27. The fault current in a power transmission circuit is of very short duration. Most faults are earth faults and existing earth fault relay systems make use of instrument type current transformers with low saturation factors. The larger the magnitude of the fault current, the shorter is the duration of the fault current flow because of the faster protection trip times. Hence the energy storage charging circuit has to be arranged to store sufficient charge for the shortest fault current flow times. A simple capacitor and rectifier circuit may be employed as the energy store 27.

A sensing circuit 28 senses the initiation of charging of the store 27 and includes a timer or delay unit arranged to close an electronic switch 29 at a predetermined delay time after the cessation of the fault current. This switch 29 couples the energy store 27 to an oscillator and output stage 30 to generate a single pulse of a high frequency carrier, typically at a frequency of several kHz. This carrier pulse is injected by a lead 31 into the current transformer 16 so giving a voltage signal on all the phase conductors, this voltage signal being the same on all three phases with respect to earth.

It is alternatively possible to use a separate current transformer for injection of the high frequency signal into the cable instead of using the same current transformer 16 as is provided for sensing the fault current.

The voltage signal is injected in series with the cable and the signal effectively is impressed across an impedance made up of the input impedance towards the primary substation 12 plus the transmission line impedance away from the point of injection towards the next section switch along the transmission line. The magnitude of the signal voltage appearing in each direction will depend on the relative network length in each direction and the impedance of the fault in the direction away from the distribution substation at which the signal is injected. It is readily possible to inject sufficient signal energy into the cable to enable signals to be received at the primary substation 12 from any of the further distribution substations along the transmission line. The circuit breaker 13 at the primary substation 12 may be open during the signalling period and hence it is necessary, at that point, to receive the signals by detecting a voltage on the cable. This is done by making use of a capacitive connection as shown in Figure 1 where the capacitance is provided by the screen capacitance of a current transformer, the screen being indicated diagrammatically at 32. For this purpose, it is convenient to use the high voltage discharge-preventing earth screen between the bushing insulation and the windings of this current transformer. The voltage signal on this screen is applied to a primary winding 33 on a further transformer 34. A secondary winding 36 of this transformer is coupled to a receiver 37 feeding a display or recorder 38.

Capacitive coupling to provide a voltage signal for the receiver however may readily be obtained in other ways. For example, a small section of the cable-lead sheath may be isolated by cutting two circumferential gaps in the sheath. An earth continuity connection would be provided across the isolated section. The isolated section of the sheath however may then be utilised as a capacitance coupling with the cable core conductors to detect the voltage signals with respect to earth on these conductors.

The receiver 37 is arranged to indicate the various received signals which are injected at different times at the different distribution substations for each of the substations at which the section switches are passing fault current. Thus, when an earth fault occurs on a feeder, for each section which is passing fault current, the current transformer in that section produces an output which charges the capacitor power store in the associated transmitter 20. The current transformers 16 for the sections which are not passing fault current remain dormant and the transmitters inactive. For the sections, passing the fault current, the energy stores 27 are charged but the transmitters remain inactive until fault current ceases due to the tripping of the circuit breaker 13 at the primary substation 12. The cessation of the fault current initiates the timer operation and so causes each transmitter along the feeder line to transmit a signal back to the primary substation, provided the fault current has passed through the current transformer at that transmitter to energise the transmitter. Different transmitters have different delay times so that the transmissions from different transmitters are received back at different times. All the transmitters and the receiver are synchronised by the cessation of the fault current. If the fault current should occur in bursts, the system will re-synchronise and reset at the end of each burst. The various time delays for the different transmitters may be in any sequence so long as the order is known at the receiver. The receiver looks in each time slot successively and conveniently includes a storage register which records the particular time slots in which transmissions are detected. The storage register is controlled by a clock 39 to operate in a cycle initiated by a sensor 40 responsive to the cessation of the fault current, i.e. the opening of the circuit breaker 13, and, following the completion of a clock cycle, the receiver is inhibited. The storage register thus indicates the location of the various transmitters which have sent in signals. It is thus possible to determine precisely which section of the network has carried the fault current. Using this information, the network may be switched manually for example to remove the fault and restore supply from an alternative route without any inspection of individual substations 14 along the feeder.

**Claims**

1. A method of locating a faulty section of a cable or line (25) in an alternating current power transmission system having a plurality of sections, each with a fault current sensor (16), characterised by the steps of, in each section, utilising the sensed fault current at a point in that section to charge capacitance means (27), energising a transmitter (20) with the stored energy to transmit a signal or signals at a predetermined time after the cessation of the fault current into the cable or line (25), the transmitters (20) at the difference points being arranged to transmit the signal or signals at different predetermined time intervals after the cessation of the fault current, and receiving (37) the various signals transmitted along said cable or line and recording the received signals to indicate in which sections the fault current has been sensed.

2. A method as claimed in claim 1 characterised in that the fault current is sensed and the capacitance means (27) charged using a current transformer (16) to extract power from the fault current.

3. A method as claimed in either of the preceding claims characterised in that said signal is transmitted as a pulse or pulses of a high frequency carrier.

4. A method as claimed in claim 3 characterised in that the same carrier frequency is used for all the signals.

5. A method as claimed in either claim 3 or claim 4 characterised in that said high frequency carrier is injected into the cable or line (25) through a current transformer.

6. A method as claimed in either claim 3 or claim 4 as appendant to claim 2 characterised in that said carrier frequency signal is injected into the cable or line (25) through the same current transformer (16) as is used for extracting power from the fault current.

7. Apparatus for locating, by the method of claim 1, a faulty section of an alternating current power transmission line or cable (25) which has a plurality of sections and having a fault current sensor (16) for each section characterised in that said apparatus comprises, for each section, means responsive to a fault current arranged to charge capacitance means forming an energy storage (27), a transmitter (20) arranged for energisation with the stored energy and to transmit into said transmission line or cable (25) a signal at a predetermined time after the cessation of the fault current, said predetermined times differing for the different transmitters whereby the signals are receivable in succession at a receiver (37) responsive to signals on the line (25), and recording means (38) responsive to the received signals to indicate the location of a faulty section.

8. Apparatus as claimed in claim 7 characterised in that said line (25) is a cable and wherein, for each section, said transmitter (20) is arranged to feed said signal into a current transformer (16) coupled to the cable, which current transformer (16) constitutes part of said means responsive to the fault current.

9. Apparatus as claimed in either claim 7 or claim 8 characterised in that each transmitter (20) is arranged to produce a pulse or pulses of a high frequency carrier.

10. Apparatus as claimed in any of claims 7 to 9 and having a receiver (37) coupled to said line (25) to be responsive to said signals characterised in that the receiver has means (38—40) for indicating the relative times of reception of the signals whereby the signals received from the various transmitters (20) are identifiable.

11. Apparatus as claimed in claim 10 characterised in that the indicating means includes means (38) providing a record or indication identifying each of the received signals.

12. Apparatus as claimed in either claim 10 or claim 11 characterised in that the receiver (20) is capacitively coupled to the line (25) to detect the signals as voltage signals.

13. Apparatus as claimed in any of claims 7 to 12 and for locating a fault current flowing in a conductor or conductors (10) of a power transmission cable (25) having a metal sheath or shield (11) characterised in that said means responsive to a fault current comprises a current transformer (16) around the cable (25), the shielding (11) of the cable being interrupted (18) adjacent the transformer (16) with a bypass circuit (17) to provide electrical continuity extending around the interruption, said bypass circuit (17) being coupled into the current transformer (16) to provide coupling of the bypass current in opposition to the direct coupling from the current in the sheath or shield (11) which sheath or shield (11) passes through the current transformer (16), said transformer (16) being arranged to charge said capacitance means (27) and further characterised in that said transmitter (20) is arranged for injecting high frequency signals into said current transformer (16) for coupling to a conductor or conductors (16) of the cable (25).

**Patentansprüche**

1. Verfahren zur Lokalisierung eines fehlerhaften Abschnittes eines Kabels oder einer Leitung in einem Wechselstrom-Leistungsübertragungssystem mit einer Anzahl von Abschnitten, jeder mit einem Fehlerstromfühler, gekennzeichnet durch die Schritte: In jedem Abschnitt wird der erfaßte Fehlerstrom dazu benützt, in einem Punkt jenes Abschnittes kapazitive Mittel aufzuladen, die einen Sender mit der gespeicherten Energie versorgen, um ein Signal oder Signale zu einer vorbestimmten Zeit nach dem Aussetzen des Fehlerstromes in das Kabel oder in die Leitung zu senden, die Sender in den verschiedenen Punkten so eingerichtet sind, daß sie das Signal oder die Signale in verschiedenen vorbestimmten Zeitintervallen nach dem Aussetzen des Fehlerstromes aussenden, Empfangen der längs des Kabels oder der Leitung übertragenen Signale und Aufzeichnung der empfangenen Signale, um anzuzeigen, in welchem Abschnitt der Fehlerstrom erfaßt wurde.

2. Verfahren nach Anspruch 1, dadurch gekennzeichnet, daß durch Verwendung eines Stromwandlers, der dem Fehlerstrom Leistung entzieht, der Fehlerstrom erfaßt wird und die kapazitiven Mittel geladen werden.

3. Verfahren nach einem der vorstehenden Ansprüche, dadurch gekennzeichnet, daß das vorgenannte Signal als Puls oder als Pulse eines Hochfrequenzträgers übertragen werde.

4. Verfahren nach Anspruch 3, dadurch gekennzeichnet, daß dieselbe Trägerfrequenz für alle Signale verwendet wird.

5. Verfahren nach Anspruch 3 oder Anspruch 4, dadurch gekennzeichnet, daß der vorgenannte Hochfrequenzträger über den Stromwandler in das Kabel oder in die Leitung eingespeist wird.

6. Verfahren nach Anspruch 3 oder Anspruch 4 in Abhängigkeit von Anspruch 2, dadurch gekennzeichnet, daß das vorgenannte Trägersignal in das Kabel oder in die Leitung über denselben Stromwandler eingespeist wird, der zur Entnahme der Leistung aus dem Fehlerstrom verwendet wird.

7. Vorrichtung für das Verfahren nach Anspruch 1 zur Lokalisierung eines fehlerhaften Abschnittes einer Wechselstrom-Leistungsübertragungsleitung oder eines Kabels mit einer Anzahl von Abschnitten, von denen jeder einen Fehlerstromfühler aufweist, dadurch gekennzeichnet, daß die vorgenannte Vorrichtung in jedem Abschnitt umfaßt: auf Fehlerstrom ansprechende Mittel, die zur Ladung von einen Energiespeicher bildenden kapazitiven Mitteln eingerichtet sind, einen Sender, der zur Speisung mit der gespeicherten Energie eingerichtet ist und in die vorgenannte Leitung oder in das Kabel zu einer vorbestimmten Zeit nach dem Aussetzen des Fehlerstromes sendet, die vorgenannte Zeit für die verschiedenen Sender verschieden ist, wodurch die aufeinanderfolgenden Signale von einem auf die Signale auf der Leitung ansprechenden Empfänger aufnehmbar sind, und Aufzeichnungsmittel, die auf die empfangenen Signale ansprechen, um einen fehlerhaften Abschnitt anzuzeigen.

8. Vorrichtung nach Anspruch 7, dadurch gekennzeichnet, daß die vorgenannte Leitung ein Kabel ist, in dem für jeden Abschnitt der vorgenannte Sender zum Einspeisen der vorgenannten Signale in einen Stromwandler eingerichtet ist, der mit dem Kabel gekoppelt ist, welcher Stromwandler Bestandteil der vorgenannten Mittel ist, die auf den Fehlerstrom ansprechen.

9. Vorrichtung nach Anspruch 7 oder Anspruch 8, dadurch gekennzeichnet, daß jeder Stromwandler zur Erzeugung eines Pulses oder von Pulsen eines hochfrequenten Trägers eingerichtet ist.

10. Vorrichtung nach einem der Ansprüche 7 bis 9, mit einem Empfänger, der auf die vorgenannten Signale anspricht und mit der vorgenannten Leitung gekoppelt ist, dadurch gekennzeichnet, daß der Empfänger Mittel zur Anzeige der relativen Empfangszeit aufweist, wodurch die von den verschiedenen Sendern empfangenen Signale identifizierbar sind.

11. Vorrichtung nach Anspruch 10, dadurch gekennzeichnet, daß die Anzeigemittel Mittel einschließen, die eine Aufzeichnung oder Anzeige jedes der empfangenen Signale vorsehen.

12. Vorrichtung nach Anspruch 10 oder Anspruch 11, dadurch gekennzeichnet, daß der Empfänger zur Detektion der Signale als Spannungssignale mit der Leitung kapazitiv gekoppelt ist.

13. Vorrichtung nach einem der Ansprüche 7 bis 12 zur Lokalisierung eines in einem Leiter oder in Leitern eines Leistungsübertragungskabels fließenden Fehlerstromes, das eine metallische Bewehrung oder Abschirmung hat, dadurch gekennzeichnet, daß jene vorgenannten Mittel, die auf einen Fehlerstrom ansprechen, einen das Kabel umschließenden Stromwandler umfassen, die Abschirmung des Kabels nahe beim Wandler mit einer Umgehungsschaltung unterbrochen ist, die für die elektrische Kontinuität rund um die Unterbrechung sorgt, vorgenannte Umgehungsschaltung zum Einkoppeln des Umgehungsstromes in Gegenphase zur direkten Kopplung des Stromes in der Bewehrung oder in der Abschirmung in den Stromwandler eingekoppelt ist, welche Bewehrung oder Abschirmung durch den Stromwandler hindurchgeht, vorgenannter Wandler zum Laden der vorgenannten kapazitiven Mittel eingerichtet ist, welche Vorrichtung weiterhin dadurch gekennzeichnet ist, daß vorgenannter Sender zur Einspeisung hochfrequenter Signale in den vorgenannten Stromwandler eingerichtet ist, um sie in einen Leiter oder in Leiter des Kabels einzukoppeln.

## Revendications

1. Procédé de localisation d'une section défectueuse d'un câble ou d'une ligne dans un système de transmission d'énergie de courant alternatif comportant une pluralité de sections munies chacune d'un détecteur de courant de défaut, ledit procédé étant caractérisé par les opérations consistant, dans chaque section, à utiliser le courant de défaut détecté en un point de cette section pour charger des moyens capacitifs, à exciter un émetteur avec l'énergie accumulée pour transmettre au câble ou à la ligne un signal ou des signaux à un instant prédéterminé après la cessation du courant de défaut, les émetteurs disposés aux différents points étant agencés de telle manière qu'ils transmettent le signal ou les signaux à des intervalles de temps prédéterminés différents après la cessation du courant de défaut, et à recevoir les divers signaux transmis le long dudit câble ou de ladite ligne puis à enregistrer les signaux reçus pour indiquer dans quelles sections le courant de défaut a été détecté.

2. Procédé tel que revendiqué dans la revendication 1, caractérisé en ce que le courant de défaut est détecté et les moyens capacitifs chargés en utilisant un transformateur d'intensité pour extraire de l'énergie du courant de défaut.

3. Procédé tel que revendiqué dans l'une quelconque des revendications précédentes, caractérisé en ce que ledit signal est transmis sous la forme d'une impulsion ou d'impulsions d'une porteuse haute-fréquence.

4. Procédé tel que revendiqué dans la revendication 3, caractérisé en ce que la même fréquence porteuse est utilisée pour tous les signaux.

5. Procédé tel que revendiqué dans la revendication 3 ou dans la revendication 4, caractérisé en ce que ladite porteuse haute-fréquence est injectée dans le câble ou dans la ligne à travers un transformateur d'intensité.

6. Procédé tel que revendiqué dans la revendication 3 ou dans la revendication 4 en tant que dépendant de la revendication 2, caractérisé en ce que ledit signal de fréquence porteuse est injecté dans le câble ou dans la ligne à travers le même transformateur d'intensité que celui qui est utilisé pour extraire de l'énergie du courant de défaut.

7. Appareil pour localiser, par le procédé de la revendication 1, une section défectueuse d'une ligne ou d'un câble de transmission d'énergie de courant alternatif comportant une pluralité de sections et muni(e) d'un détecteur de courant de défaut pour chaque section, ledit appareil étant caractérisé en ce qu'il comprend, pour chaque section, des moyens sensibles à un courant de défaut agencés de manière à charger des moyens capacitifs formant un accumulateur d'énergie, un émetteur agencé de manière à être excité par l'énergie accumulée et à transmettre à ladite ligne ou audit câble de transmission un signal à un instant prédéterminé après la cessation du courant de défaut, lesdits instants prédéterminés différant pour les différents émetteurs, moyennant quoi les signaux peuvent être reçus en succession à un récepteur sensible à des signaux présents sur la ligne, et des moyens d'enregistrement sensibles aux signaux reçus pour indiquer l'emplacement d'une section défectueuse.

8. Appareil tel que revendiqué dans la revendication 7, caractérisé en ce que ladite ligne est un câble et dans lequel, pour chaque section, ledit émetteur est agencé de manière à introduire ledit signal dans un transformateur d'intensité couplé avec le câble, transformateur d'intensité qui constitue une partie desdits moyens sensibles au courant de défaut.

9. Appareil tel que revendiqué dans la revendication 7 ou dans la revendication 8, caractérisé en ce que chaque émetteur est agencé de manière à produire une impulsion ou des impulsions d'une porteuse haute-fréquence.

10. Appareil tel que revendiqué dans l'une quelconque des revendications 7 à 9, et comportant un récepteur couplé avec ladite ligne de manière à être sensible auxdits signaux, ledit appareil étant caractérisé en ce que le récepteur comporte des moyens pour indiquer les instants relatifs de réception des signaux, grâce à quoi les signaux reçus des divers émetteurs sont identifiables.

11. Appareil tel que revendiqué dans la revendication 10, caractérisé en ce que les moyens indicateurs comprennent des moyens produisant un enregistrement ou une indication identifiant chacun des signaux reçus.

12. Appareil tel que revendiqué dans la revendication 10 ou dans la revendication 11, caractérisé en ce que le récepteur est couplé capacitivement avec la ligne pour détecter les signaux sous la forme de signaux de tension.

13. Appareil tel que revendiqué dans l'une quelconque des revendications 7 à 12, et destiné à localiser un courant de défaut passant sur un conducteur ou des conducteurs d'un câble de transmission d'énergie comportant une gaine ou un blindage métalliques, ledit appareil étant caractérisé en ce que lesdits moyens sensibles à un courant de défaut comprennent un transformateur d'intensité autour du câble, le blindage de câble étant interrompu au voisinage immédiat du transformateur, avec un circuit de dérivation pour assurer une continuité électrique s'étendant d'un côté à l'autre de l'interruption, ledit circuit de dérivation étant couplé avec le transformateur d'intensité pour assurer un couplage du courant de dérivation en opposition avec le couplage direct à partir du courant présent dans la gaine ou le blindage, ladite gaine ou ledit blindage traversant le transformateur d'intensité, ledit transformateur étant agencé de manière à charger lesdits moyens capacitifs, et ledit appareil étant caractérisé en outre en ce que ledit émetteur est agencé de manière à injecter des signaux haute-fréquence dans ledit transformateur d'intensité pour les coupler avec un conducteur ou des conducteurs du câble.

FIG. 1.

PRIMARY SUB-STATION

DISTRIBUTION SUB-STATION

CIRCUIT BREAKER

RECEIVER

CLOCK

DISPLAY REGISTER

FAULT CURRENT CESSATION SENSOR

SECTION SWITCH

TRANSMITTER

0 026 801

FIG. 2.